# FASCICULE DE BREVET EUROPEEN

(11) **EP 3 211 329 B1**
(45) Date de publication et mention de la délivrance du brevet: **07.11.2018**
(21) Numéro de dépôt: 17305190.5
(22) Date de dépôt: 21.02.2017
(51) Int. Cl.: F24D 13/04, F24D 19/00, F24H 9/06

(54) **DISPOSITIF ADDITIONNEL DE CHAUFFAGE À SOUFFLANTE POUR RADIATEUR PORTE-SERVIETTE**
ZUSATZ THERMOKONVEKTOR HEIZEINHEIT FÜR HEIZKÖRPER
ADDITIONAL THERMOCONVECTOR HEATING UNIT FOR TOWEL DRIER RADIATOR

(30) Priorité: 24.02.2016 FR 1651514
(43) Date de publication de la demande: 30.08.2017
(73) Titulaire: Imhotep Création, 38780 Pont-Evêque (FR)
(72) Inventeur: BENICHOU, Fabrice, 38780 ESTRABLIN (FR)
(74) Mandataire: Jacobacci Coralis Harle

(56) Documents cités:
- EP-A1- 2 921 796
- DE-A1- 19 638 519

## Description

### Domaine technique de l'invention

La présente invention concerne un dispositif additionnel de chauffage destiné à être fixé sur un corps de chauffe à barreaux, de type radiateur sèche-serviettes.

### Etat de la technique

Il est connu de l'état de la technique l'utilisation d'un corps de chauffe à barreaux pour simultanément chauffer l'air et sécher une serviette ou un vêtement suspendu à un barreau. Ce type de corps de chauffe est couramment appelé radiateur sèche-serviettes, habituellement utilisé dans une salle de bain, un vestiaire ou autre. Un radiateur sèche-serviettes comprend deux montants verticaux entre lesquels sont interposés des barreaux chauffants horizontaux. Les montants verticaux et les barreaux chauffants horizontaux s'étendent dans un plan d'extension générale du radiateur qui est destiné à être disposé parallèlement à une surface d'accroche du radiateur. De façon avantageuse, les barreaux chauffants sont écartés d'une distance suffisante pour permettre d'étendre une ou plusieurs serviettes sur les barreaux et, ainsi, permettre de les sécher. Toutefois, il peut s'avérer qu'une ou plusieurs serviettes recouvrent complètement les barreaux chauffants, limitant fortement les capacités du radiateur à chauffer la pièce.

Afin de remédier à cet inconvénient, il est connu de l'état de la technique l'utilisation d'un radiateur additionnel de chauffage, permettant de chauffer la pièce lorsque les barreaux du radiateur sont recouverts par une ou plusieurs serviettes.

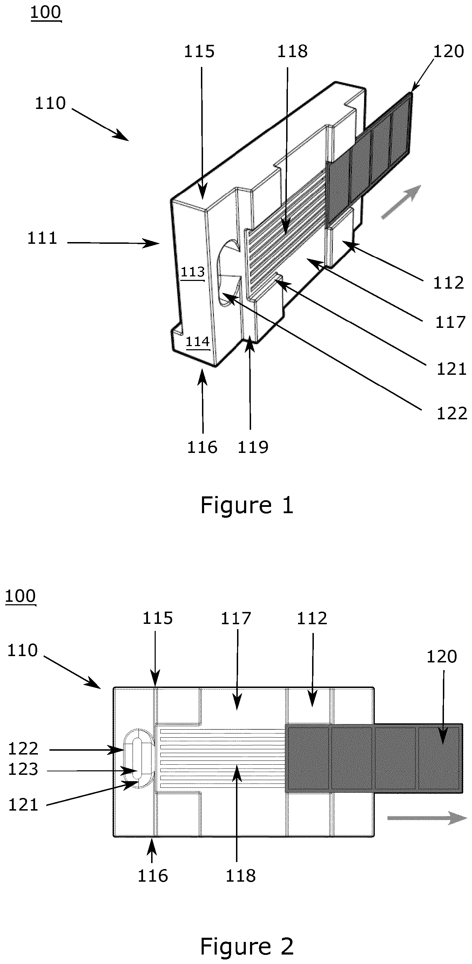

Le document FR 2 923 895 décrit un exemple de radiateur sèche-serviettes équipé d'un tel dispositif additionnel. Comme illustré à la figure 1 de ce document FR 2 923 895, le dispositif additionnel 7 de chauffage est fixé sur le radiateur sèche-serviettes 1 à l'aide d'un rail télescopique 11 visible sur la figure 2. De façon avantageuse, le rail télescopique permet d'adapter sa longueur à l'écartement entre les montants verticaux 2,3 du radiateur. Il en résulte une adaptabilité du radiateur additionnel de chauffage à une gamme étendue de radiateur sèche-serviettes 1.

Néanmoins, cette solution n'est pas idéale car le dispositif additionnel se trouve ainsi fixé sous le radiateur, dans un espace inscrit dans le prolongement des montants verticaux 2,3, augmentant de fait son encombrement. Cela peut s'avérer problématique lors de la pause du radiateur dans des espaces restreints ou encombrés, comme par exemple dans une salle de bain.

Selon un autre inconvénient, l'ensemble du dispositif additionnel de chauffage est visible de l'utilisateur. Or, l'utilisateur peut souhaiter utiliser un tel type de dispositif additionnel tout en limitant son impact sur l'esthétisme du radiateur, afin de respecter l'aménagement de la pièce.

Il existe donc un besoin pour un dispositif additionnel de chauffage adaptable sur une gamme étendue de radiateurs sèche-serviettes, de façon plus discrète, afin de préserver l'encombrement et l'esthétisme du radiateur.

### Description de l'invention

Afin de résoudre les problématiques décrites ci-dessus, la présente demande propose un dispositif additionnel de chauffage, destiné à être fixé sur un corps de chauffe à barreaux et/ou à lames chauffantes. Le dispositif additionnel de chauffage, également nommé ci-après dispositif additionnel, comprend un boîtier muni d'au moins une entrée d'air et d'une sortie d'air. Une entrée d'air et une sortie d'air sont respectivement ménagées dans une première partie et une deuxième partie du boîtier. Le boîtier comprend également un élément chauffant et un pulseur, tous deux agencés dans le boîtier afin de permettre le chauffage d'un flux d'air passant par une entrée et une sortie d'air. Par le terme « pulseur », on entend tout moyen apte à faire circuler un flux d'air depuis une entrée vers une sortie du boîtier.

L'invention se caractérise en ce que le dispositif comprend des moyens de fixation sur le corps de chauffe, les moyens de fixation comprenant au niveau de la première partie du boîtier au moins deux fentes traversantes allongées et parallèles entre elles. La largeur de chaque fente est configurée pour pouvoir accueillir une partie arrière d'un support lié à un corps de chauffe, la partie arrière étant configurée pour coopérer avec un moyen de serrage apte à prendre appui sur le boîtier de sorte à maintenir le boîtier contre le corps de chauffe.

Ainsi, de façon avantageuse, les fentes du boîtier permettent de fixer le dispositif additionnel contre le radiateur et non plus en dessous de celui-ci comme décrit ci-dessus. De ce fait, on peut dissimuler la première partie du boîtier derrière le radiateur tout en permettant que sa deuxième partie dépasse du radiateur, afin que le flux d'air sortant du dispositif additionnel ne soit pas gêné par le radiateur.

Selon un autre avantage, les fentes du boîtier permettent d'adapter et/ou de faire varier la position du boîtier par rapport aux supports liés aux radiateurs. Autrement dit, les supports peuvent traverser les fentes à différents endroits et ainsi permettre de régler précisément la position du boîtier vis-à-vis du radiateur, de sorte que seule sa deuxième partie soit visible pour un utilisateur du radiateur.

De préférence, la longueur de chaque fente est supérieure à la largeur d'un barreau chauffant ou d'une lame chauffante du corps de chauffe, afin de pouvoir positionner une sortie du boîtier au plus près du radiateur. Dans le cas où le radiateur comporte des barreaux chauffants de largeurs différentes, la longueur des fentes est égale ou supérieure à la largeur du dernier barreau chauffant du radiateur, afin de permettre à la deuxième partie du boîtier d'affleurer sous ce barreau et ainsi cacher la deuxième partie du boîtier derrière le radiateur. A titre d'exemple, la longueur d'une fente peut être comprise entre 2 cm et 15cm, de préférence comprise entre 4cm et 10cm, de préférence comprise entre 4cm et 8cm.

Selon une autre caractéristique de l'invention, une face arrière du boîtier destinée à être en vis-à-vis d'un support de fixation du corps de chauffe, est autour de chaque fente de forme concave. En d'autres termes, au niveau de la face arrière du boîtier les fentes sont entourées par une surface concave. La concavité de la surface permet de façon avantageuse aux moyens de serrage de prendre appui de façon symétrique sur le boîtier, lorsque la partie arrière du support est oblique ou légèrement oblique par rapport à une face avant du boîtier. Ainsi, le dispositif additionnel peut aisément se fixer sur des radiateurs lorsque les supports liés au radiateur ne sont pas parallèles entre eux. C'est par exemple le cas lorsque les supports sont positionnés perpendiculairement à des barreaux chauffants courbes. La concavité de la surface entourant les fentes permet d'assurer un maintien optimum du boîtier indépendamment du fait que sa forme soit plane ou courbe. De ce fait, le boîtier peut s'adapter aisément et discrètement sur une large gamme de radiateurs.

Selon une variante de réalisation, la surface du boîtier a un coefficient de friction de plus grande valeur autour des fentes et plus précisément au niveau de sa face arrière. Le coefficient de friction est plus important autour des fentes afin d'assurer un meilleur maintien du boîtier contre le radiateur par les moyens de serrage.

Selon une autre variante de réalisation, la surface du boîtier a un coefficient de friction de plus grande valeur au niveau des zones de sa face avant destinées à être en contact avec le radiateur. Cela permet avantageusement un meilleur maintien du dispositif additionnel contre le radiateur et ainsi limiter les forces de pression exercées sur le boîtier pour assurer son maintien contre le radiateur.

Par les termes « de plus grande valeur », on entend les valeurs maximales du coefficient de friction de la surface du boîtier. Ces valeurs maximales comprennent les valeurs supérieures à la moyenne du coefficient de friction à la surface de la boîte, de préférence ces valeurs sont supérieures d'au moins 20% ou d'au moins 80% ou d'au moins 160% à la valeur moyenne du coefficient de friction à la surface de la boîte.

Selon une variante de réalisation préférée, les moyens de friction présents à la surface du boîtier peuvent comprendre un matériau élastique et/ou des rugosités de type nervures ou bosses.

Selon un autre mode de réalisation de l'invention, chaque fente débouche dans le fond d'une cavité ouverte sur la face arrière du boîtier. De préférence, la profondeur de chaque cavité est adaptée de sorte que le moyen de serrage ne dépasse pas de ladite cavité. Ainsi, les moyens de serrage n'encombrent pas la face arrière du boîtier et ne sont donc pas susceptibles de heurter le support de fixation du radiateur lors de son installation.

Selon une caractéristique de l'invention, le boîtier comprend au moins une entrée d'air ménagée dans la face arrière du boîtier. En d'autres termes, au moins une entrée d'air est agencée dans le boîtier de manière à être en vis-à-vis du support de fixation du radiateur.

Selon un mode de réalisation préféré, l'entrée d'air est entourée par des moyens de guidage permettant de positionner un filtre devant ladite entrée. De façon avantageuse, les moyens de guidage sont agencés de manière à permettre l'évacuation du filtre par un des côtés du boîtier. Par le terme « côté », on entend un bord du boîtier reliant sa face arrière à une face avant. Autrement dit, les moyens de guidage permettent un déplacement latéral du filtre le long de la face arrière, de manière à faciliter son positionnement ou son remplacement par un utilisateur. Cela est particulièrement avantageux lorsque la face arrière du boîtier est proche ou en contact du support de fixation du radiateur.

Selon une autre caractéristique de l'invention, une entrée d'air est agencée dans le fond d'une cavité ouverte sur la face arrière et au moins un côté du boîtier. Ainsi, le boîtier peut venir en contact du support de fixation du radiateur lors de son installation, sans que l'entrée d'air soit obstruée. Cela permet avantageusement de réduire l'encombrement nécessaire pour le bon fonctionnement du dispositif additionnel lorsque celui-ci est présent entre le radiateur et le support de fixation. Selon un autre avantage, la cavité comprend une ouverture sur au moins deux côtés du boîtier de manière à permettre une alimentation continue en air du boîtier, même lorsque une serviette recouvre un côté du boîtier. Par exemple, la cavité peut comprendre une ouverture sur un côté supérieur du boîtier et une ouverture sur au moins un côté latéral et/ou une ouverture sur un côté inférieur. Par les termes « côté supérieur » et « côté inférieur », on entend respectivement un bord délimitant la première et la deuxième partie du boîtier.

La face arrière du boîtier comprend également au moins une cavité destinée à accueillir des câbles d'alimentation électrique du boîtier. De façon avantageuse, la cavité peut être de dimensions suffisantes pour accueillir les parties saillantes d'une prise murale. De préférence, la cavité destinée à accueillir des câbles d'alimentation et la cavité dans laquelle l'entrée d'air est présente, forment une seule et même cavité s'étendant le long de la face arrière du boîtier, entre l'entrée d'air et un ou plusieurs côté dudit boîtier.

Selon un mode de réalisation de l'invention, la deuxième partie du boîtier comprend au moins une sortie d'air ménagée dans la face avant du boîtier qui est destinée à être en vis-à-vis du corps de chauffe. Selon un mode de réalisation préféré, au moins une sortie d'air est de forme allongée et agencée perpendiculairement aux fentes traversant la première partie du boîtier. Au moins une sortie d'air peut comprendre des moyens d'orientation permettant de modifier la direction du flux d'air sortant du boîtier.

Selon une autre caractéristique de l'invention, la deuxième partie du boîtier comprend des moyens de détection de présence d'un utilisateur. Ces moyens de détection contrôlent le fonctionnement du dispositif additionnel de chauffage de sorte que celui-ci chauffe le local en fonction de la présence d'un utilisateur. En d'autres termes, les moyens de détection de présence permettent de valider le besoin de confort et de l'absence d'un utilisateur permettant d'optimiser les économies d'énergie lorsque personne n'est détecté durant un certain temps et que le chauffage est alors inutile. Le boîtier peut comprendre également des moyens d'inclinaison permettant de contrôler l'orientation du champ de détection des moyens de détection. Les moyens de détection peuvent comprendre des moyens de détection sonore et/ou visuelle.

La présente demande concerne également un moyen de serrage apte à coopérer avec une partie arrière d'un support qui est lié à un corps de chauffe, le moyen de serrage comprenant une face de forme complémentaire à la surface concave du boîtier qui entoure une fente d'un dispositif additionnel de chauffage décrit ci-dessus, de manière à optimiser la friction entre le moyen de serrage et le boîtier. Le support peut être lié au corps de chauffe de façon réversible ou non.

### Description des figures

Les caractéristiques de l'invention mentionnées ci-dessus, ainsi que d'autres, apparaîtrons plus clairement à la lecture de la description suivante des exemples de réalisation ci-dessous, en se référant aux dessins annexés sur lesquels :
- la figure 1 représente une vue en perspective d'un dispositif additionnel de chauffage selon l'invention ;
- la figure 2 représente une vue de derrière d'un dispositif selon la figure 1 ;
- la figure 3 représente une vue de devant d'un dispositif selon la figure 1 ;
- la figure 4 représente une vue en perspective de deux écrous faisant partie d'un kit de montage d'un dispositif selon la figure 1 ;
- la figure 5 représente le montage sur un radiateur plan à lames d'un dispositif selon la figure 1 ;
- la figure 6 représente une vue de coupe de la figure 5 ;
- la figure 7 représente deux supports faisant partie d'un kit complémentaire de montage d'un dispositif selon la figure 1 ;

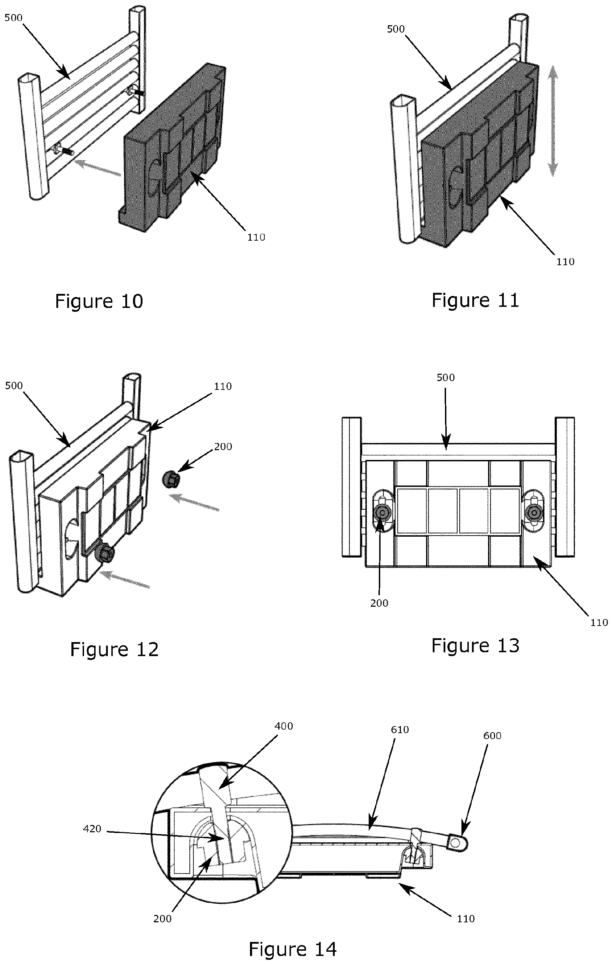

- les figures 8 à 13 représentent les différentes étapes pour monter sur radiateur plan à barreaux un dispositif selon la figure 1;
- la figure 14 représente une vue de coupe d'un dispositif selon la figure 1, monté sur un radiateur courbe à barreaux, à l'aide d'un kit complémentaire de montage.

### Description détaillée de l'invention

La présente demande propose un dispositif additionnel de chauffage adaptable sur une gamme étendue de radiateurs sèche-serviettes, de façon plus discrète, afin de préserver l'encombrement et l'esthétisme du radiateur.

La figure 1 illustre un exemple de réalisation d'un dispositif additionnel de chauffage selon l'invention, destiné à être monté sur un radiateur sèche-serviettes. Selon le présent exemple, le dispositif additionnel 100 comprend un boîtier 110 comportant une face avant 111 destinée à faire face au radiateur et une face arrière 112 destinée à être en vis-à-vis du support de fixation du radiateur. Le boîtier se divise en une première partie 113 et une deuxième partie 114, respectivement délimitées par un côté supérieur 115 et un côté inférieur 116 du boîtier.

Le boîtier comprend également une cavité 117 d'alimentation agencée sur sa face arrière 112. La cavité d'alimentation alimente en air une entrée d'air 118 présente dans le fond de la cavité, au niveau de la première partie 113 du boîtier. Selon le présent exemple, la cavité d'alimentation est ouverte sur le côté supérieur 115 et sur le côté inférieur 116, ainsi que sur les côtés latéraux 119 du boîtier. De cette façon, la cavité d'alimentation permet une alimentation constante en air du boîtier même si une serviette recouvre un côté du boîtier et/ou la face arrière se trouve plaquée contre le support de fixation du radiateur.

De façon avantageuse, les dimensions de la cavité 117 d'alimentation sont choisies de manière à permettre à un utilisateur d'évacuer par un côté latéral 119 du boîtier un filtre de protection 120 présent devant l'entrée d'air 118. Afin de faciliter le remplacement du filtre, les parois de la cavité comportent des rainures 121 pour maintenir le filtre de protection 120 devant l'entrée d'air et guider son déplacement dans la cavité.

La face arrière 112 du boîtier comporte également, en temps que moyens de fixation, deux cavités 122 de fixation, agencées de chaque côté de la cavité 117 d'alimentation. Comme illustré à la figure 2, le fond de chaque cavité 122 est traversé par une fente 123 de réglage qui débouche sur la face avant 111 du boîtier. Chaque fente 123 est de largeur suffisante pour permettre à un appendice, lié au radiateur, de passer à travers lesdites fentes. Les fentes 123 sont parallèles entre elles et de longueur adéquate afin de pouvoir régler la position du boîtier vis-à-vis desdits appendices et donc vis-à-vis du radiateur (voir ci-dessous). A titre d'exemple, chaque fente à une largeur comprise entre 1 cm et 3 cm et une longueur comprise entre 2cm et 15cm.

De façon avantageuse, le fond des cavités 122 est de forme concave afin de permettre la fixation du dispositif additionnel de chauffage sur une grande variété de corps de chauffe, tel qu'explicité ci-dessous. De préférence, le fond de chaque cavité 122 comporte des nervures 121 et/ou une certaine rugosité, destinées à venir en contact avec des moyens de serrage décrits ci-dessous pour améliorer la friction entre eux lors du montage du boîtier sur le radiateur. Les nervures et/ou le fond de la cavité sont réalisées dans une sorte de gomme, de caoutchouc, ou tout autre matériau à fort coefficient de friction.

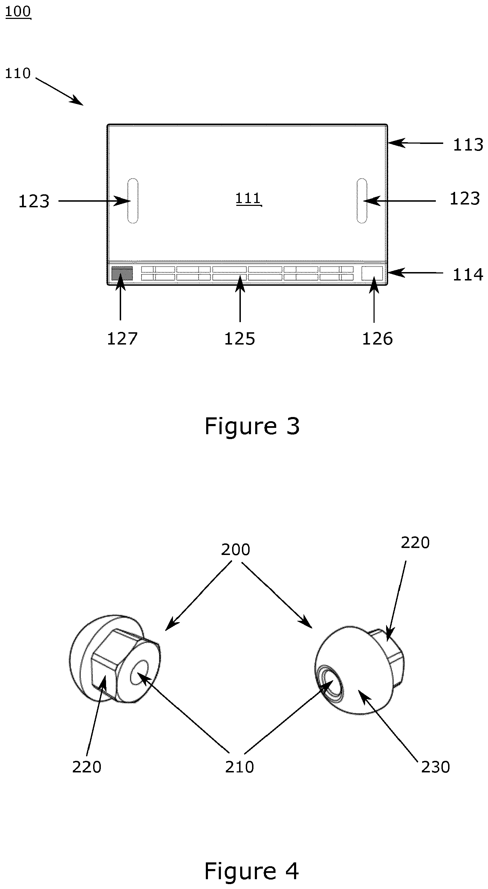

La figure 3 présente la face avant 111 du boîtier où l'on distingue les deux fentes 123 de réglage. Une sortie d'air 125 est ménagée dans la face avant et dans la deuxième partie 114 du boîtier. Un flux d'air provenant de l'entrée d'air 118 est chauffé et propulsé par des éléments présents dans le boîtier 110, avant d'être expulsé par la sortie d'air 125. La sortie d'air comprend une grille orientable permettant de guider le flux d'air dans une direction privilégiée. La deuxième partie du boîtier est destinée à dépasser du radiateur afin que le flux d'air chaud expulsé ne soit pas gêné par le radiateur. La sortie d'air 125 est de préférence agencée au plus près du côté inférieur 114 du boîtier et de forme allongée, afin que la deuxième partie 114 du boîtier dépassant du radiateur soit minimale pour limiter son encombrement et sa visibilité. Cela permet également de préserver l'esthétisme du radiateur.

Grâce à la présence des fentes 123 de réglage, le boîtier 110 peut ainsi être monté sur un radiateur de sorte que sa première partie 113 soit dissimulée derrière le radiateur et que seule sa deuxième partie 114 dépasse. La deuxième partie peut dépasser par n'importe quel côté du radiateur : latéral, supérieur ou inférieur. De préférence, le boîtier dépasse par le bas le radiateur afin de guider l'air à l'endroit le plus adapté du radiateur et d'éviter toute obstruction de la sortie d'air par une serviette ou un peignoir positionnés sur ledit radiateur. Afin de faciliter l'accès aux fonctions du dispositif additionnel 100 de chauffage, la deuxième partie de la face avant 111 est saillante pour pouvoir affleurer ou légèrement dépasser la face avant du radiateur. Ainsi, un utilisateur peut visualiser et interagir aisément avec une interface de contrôle 126 agencée à côté de la sortie d'air 125.

L'interface de contrôle 126 comporte des moyens permettant à un utilisateur de contrôler le fonctionnement du dispositif additionnel de chauffage, tel que sa mise en marche, son arrêt, sa température de chauffe et éventuellement la programmation de cycles de fonctionnement en durée et en température.

A côté de la sortie d'air est également présent un dispositif de détection 127 de la présence et/ou de l'absence d'un utilisateur. Ce dispositif comporte des moyens de détection visuelle comme par exemple des capteurs infrarouge. Le dispositif de détection peut également comprendre des moyens d'orientation permettant d'orienter son angle de détection en fonction de la position du radiateur dans le local. De préférence, le dispositif de détection est logé dans une cavité présente dans la face avant 111 du boîtier, de sorte à limiter la perturbation de son champ de détection visuelle par le flux d'air chaud sortant du boîtier.

Le dispositif de détection 127 peut comprendre des moyens de calcul et des moyens de mémorisation (non représentés sur les figures), permettant de mettre en oeuvre un procédé de contrôle du fonctionnement du dispositif additionnel 100 en fonction de la présence ou de l'absence d'un utilisateur dans le local. Ce procédé de contrôle peut comprendre une première étape consistant à mesurer, grâce aux moyens de calcul, des périodes de temps durant lesquelles la présence de l'examinateur n'est pas détectée puis, selon une deuxième étape, comparer chaque période de temps mesurée à une valeur seuil de présence mémorisée par les moyens de mémorisation, et selon une troisième étape, diminuer la température de l'élément de chauffage contenu dans le boîtier de un ou plusieurs degrés lorsqu'une période de temps est supérieure à la valeur seuil. Ces étapes sont réalisées de façon cyclique afin qu'en cas d'absence prolongée de l'utilisateur, la température de chauffage baisse régulièrement jusqu'à atteindre une température critique commandant la mise en mode Hors-Gel. Une valeur seuil de présence peut être comprise entre quelques minutes et quelques dizaines de minutes, elle est de préférence de l'ordre de 20, 40 ou 60 minutes. Une température critique peut être comprise entre 7°C et 25°C, de préférence de l'ordre de 18°C, 17.5°C ou 17°C.

Selon une alternative, des moyens de détection visuelle peuvent être couplés aux moyens de détection sonore de sorte à confirmer ou infirmer la présence ou l'absence de l'utilisateur. Dans ce cas, les moyens de calcul permettent la diminution de la température de chauffage uniquement si le niveau sonore dans la pièce est inférieur à un seuil sonore mémorisé par les moyens de mémorisation. Un seuil sonore peut avoir une valeur correspondant au niveau sonore moyen dû à l'écoulement de l'eau pendant une douche ou bien, à l'écoulement de l'eau lors du remplissage d'un lavabo ou d'une baignoire. De façon avantageuse, les moyens de détection visuelle couplés aux moyens de détection sonore permettent au dispositif additionnel 100 de continuer à chauffer le local, même si l'utilisateur n'est plus présent dans le champ de vision des moyens de détection visuelle. Ce mode de réalisation offre ainsi un confort accru pour l'utilisateur en lui assurant un chauffage du local quelque soit le lieu qu'il occupe dans ledit local. En d'autres termes, ce mode de réalisation permet d'ajuster le confort de l'utilisateur en fonction de la détection de sa présence ou de réduire la température et favoriser les économies d'énergie en fonction de la détection de son absence.

La présente demande décrit également un kit de montage d'un dispositif additionnel 100 décrit ci-dessus, comprenant au moins deux écrous tel que représenté à la figure 3. Chaque écrou 200 est traversé par un trou 210 taraudé permettant de visser l'écrou sur une tige filetée. Pour cela, l'écrou comporte de façon connue une partie arrière 220 de forme hexagonale, permettant à un utilisateur de viser l'écrou sur la tige filetée à l'aide d'une clé dédiée. L'écrou 200 comporte une partie avant 230 de forme semi-sphérique, destinée à prendre appui sur le fond d'une cavité 122 de fixation d'un boîtier décrit ci-dessus. Plus précisément, la partie avant 230 de l'écrou est de forme complémentaire à la forme concave de la cavité afin de pouvoir pivoter dans la cavité 122, à l'image d'une rotule mécanique.

A présent sont décrits les différentes étapes permettant de monter un boîtier 110 à l'aide d'un kit tel que décrit ci-dessus, sur un radiateur 300 droit à lames. Selon le présent exemple, le radiateur comporte deux tiges filetées 310 soudées à l'arrière du radiateur au niveau d'une même lame 320.

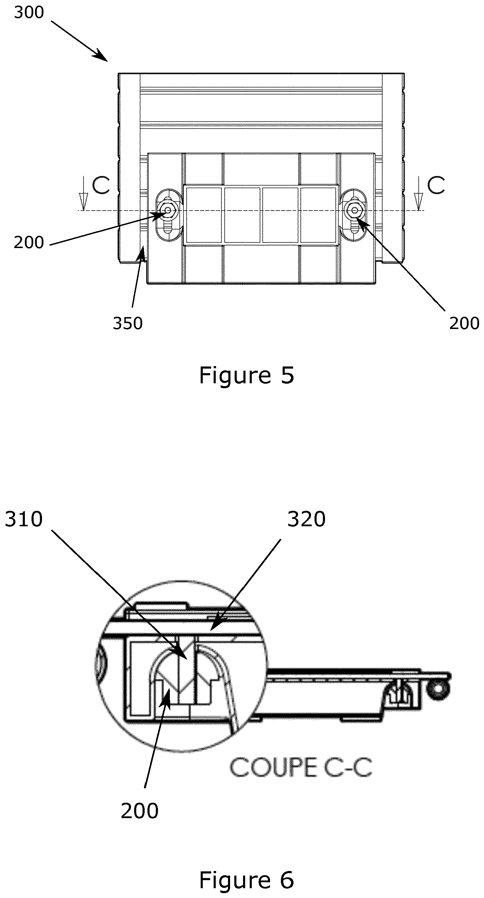

Selon une première étape, on place la face avant du boîtier contre le radiateur 300 de sorte que les tiges filetées 310 passent à travers les fentes 123 de réglage du boîtier 110. On adapte ensuite la hauteur du boîtier par rapport au radiateur 300, de sorte que seule la deuxième partie 114 du boîtier dépasse le dernier barreau 350 du radiateur. Selon une dernière étape, un écrou 200 est vissé sur chaque tige fileté 310 jusqu'à ce que la partie avant de l'écrou serre suffisamment le boîtier contre le radiateur (voir figures 5 et 6).

La présente demande décrit également un kit complémentaire permettant de monter le boîtier 110 sur des radiateurs ne comportant pas de tiges filetées dédiées au montage, comme précédemment.

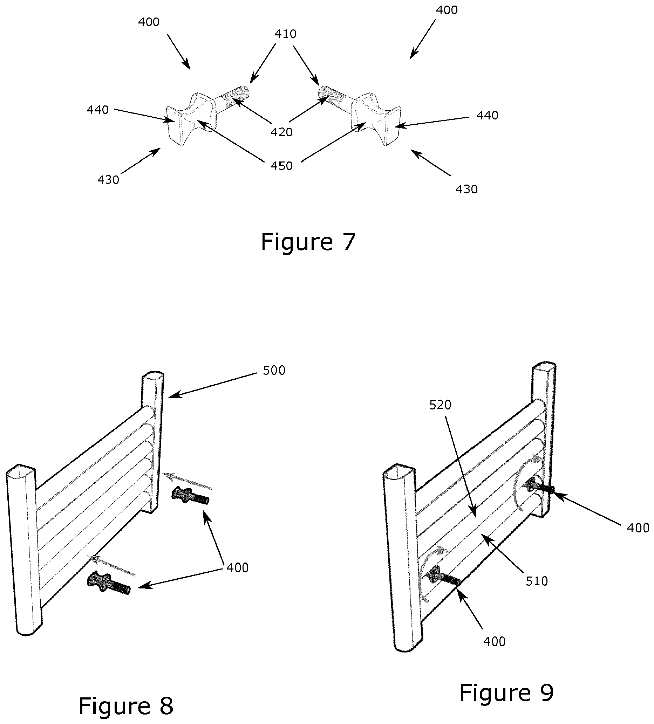

Par rapport au kit précédent, le kit complémentaire comprend en plus deux supports 400 de montage tel qu'illustré à la figure 7. Un support 400 comprend au niveau d'une partie arrière 410 une tige fileté 420 permettant le vissage de l'écrou 200. La partie avant 430 du support comprend une tête de fixation 440 telle que décrite dans le document FR 2 963 963 A1. Plus précisément, la tête de fixation est conformée pour s'insérer entre deux barreaux adjacents d'un corps de chauffe dans une première position, et pour se bloquer entre les deux barreaux adjacents dans une seconde position de sorte à verrouiller positivement la tête de fixation sur le corps de chauffe. Ceci permet un montage facile évitant par la suite tout mouvement relatif du support 300 par rapport au radiateur. Ce blocage peut, par exemple, être réalisé par friction. Plus précisément, la tête de fixation 440 comporte une gorge 450, de préférence de section ovale, qui peut être divisée en deux paires de zone, deux zones d'une même paire étant opposées. Les barreaux du corps de chauffe étant sensiblement parallèles, les deux zones de la première paire, dite paire d'insertion, sont séparées par une distance inférieure à la distance séparant deux barreaux adjacents. Chaque zone de la première paire de zone peut être perpendiculaire au second plan défini précédemment. Les deux zones de la seconde paire, dite paire de blocage, sont séparées par une distance supérieure ou égale à la distance séparant les deux barreaux adjacents. La première paire de zone est, de préférence formée dans deux plans parallèles entre eux et perpendiculaires aux plans associés à la seconde paire de zone.

## Revendications

1. Dispositif additionnel (100) de chauffage destiné à être fixé sur un corps de chauffe à barreaux et/ou à lames chauffantes, comprenant :
- un boîtier (110) muni d'au moins une entrée d'air (118) et une sortie d'air (125), respectivement ménagées dans une première partie (113) et une deuxième partie (114) du boîtier ; et
- un élément chauffant ainsi qu'un pulseur, tous deux agencés dans le boîtier (110) de sorte à permettre le chauffage d'un flux d'air passant par une entrée d'air (118) et une sortie d'air (125),
**caractérisé en ce qu'**il comprend des moyens de fixation sur le corps de chauffe, les moyens de fixation comprenant au niveau de la première partie (113) du boîtier par au moins deux fentes (123) traversantes allongées et parallèles entre elles, la largeur de chaque fente (123) étant configurée pour pouvoir accueillir une partie arrière (410) d'un support (400) lié au corps de chauffe, et la partie arrière (410) étant configurée pour coopérer avec un moyen de serrage (200) apte à prendre appui sur le boîtier (110) de sorte à le maintenir contre le corps de chauffe.

2. Dispositif additionnel de chauffage selon la revendication 1, **caractérisé en ce que** chaque fente (123) a une longueur supérieure à la largeur d'un barreau chauffant ou d'une lame chauffante du corps de chauffe.

3. Dispositif additionnel de chauffage selon l'une des revendications précédentes, **caractérisé en ce qu'**une face arrière (112) du boîtier (110) destinée à être en vis-à-vis d'un support de fixation du corps de chauffe, est autour de chaque fente (123) de forme concave.

4. Dispositif additionnel de chauffage selon la revendication précédente, **caractérisé en ce que** la surface du boîtier a un coefficient de friction de plus grande valeur autour des fentes (123) et au niveau de sa face arrière (112).

5. Dispositif additionnel de chauffage selon l'une des revendications précédentes, **caractérisé en ce que** la surface du boîtier a un coefficient de friction de plus grande valeur au niveau des zones de sa face avant (111) destinées à être en contact avec le radiateur

6. Dispositif additionnel de chauffage selon la revendication précédente, **caractérisé en ce que** les moyens de friction présents à la surface du boîtier comprennent un matériau élastique et/ou des rugosités de type nervures ou bosses.

7. Dispositif additionnel de chauffage selon l'une des revendications précédentes, **caractérisé en ce que** chaque fente (123) débouche dans le fond d'une cavité (122) ouverte sur la face arrière (112) du boîtier (110).

8. Dispositif additionnel de chauffage selon l'une des revendications précédentes, **caractérisé en ce qu'**au moins une entrée d'air (118) est ménagée dans la face arrière (112) du boîtier (110).

9. Dispositif additionnel de chauffage selon la revendication précédente, **caractérisé en ce que** l'entrée d'air (118) est entourée par des moyens de guidage (121) permettant de positionner un filtre (120) devant ladite entrée.

10. Dispositif additionnel de chauffage selon la revendication précédente, **caractérisé en ce que** les moyens de guidage (121) permettent d'évacuer le filtre par un des côté du boîtier.

11. Dispositif additionnel de chauffage selon l'une des revendications précédentes, **caractérisé en ce que** l'entrée d'air (118) est agencée dans le fond d'une cavité (117), ouverte sur la face arrière (112) et au moins un côté du boîtier (110).

12. Dispositif additionnel de chauffage selon l'une des revendications précédentes, **caractérisé en ce que** la deuxième partie (114) du boîtier (110) comprend au moins une sortie d'air (125) ménagée dans une face avant (111) du boîtier destinée à être en vis-à-vis du corps de chauffe.

13. Dispositif additionnel de chauffage selon la revendication précédente, **caractérisé en ce qu'**au moins une sortie d'air (125) est de forme allongée et agencée perpendiculairement aux fentes (123) traversant la première partie (113) du boîtier (110).

14. Dispositif additionnel de chauffage selon l'une des revendications précédentes, **caractérisé en ce que** la deuxième partie (114) du boîtier comprend des moyens de détection (127) de la présence d'un utilisateur.

15. Moyen de serrage (200) apte à coopérer avec partie arrière (410) d'un support (400) lié à un corps de chauffe, **caractérisé en ce que** le moyen de serrage comprend une face (230) de forme complémentaire à la surface concave du boîtier (110) entourant une fente (123) d'un dispositif additionnel de chauffage selon l'une des revendications 3 à 14, de manière à optimiser la friction entre le moyen de serrage (200) et le boîtier (110).

## Patentansprüche

1. Zusatz-Heizvorrichtung (100), die dazu vorgesehen ist, an einem Heizkörper mit Heizstangen und/oder -lamellen befestigt zu werden, umfassend:
- ein Gehäuse (110), das mit mindestens einem Lufteinlass (118) und einem Luftauslass (125) ausgestattet ist, die jeweils in einem ersten Teil (113) und einem zweiten Teil (114) des Gehäuses ausgestaltet sind; und
- ein Heizelement sowie ein Gebläse, alle beide so im Gehäuse (110) angeordnet, dass sie das Erhitzen eines Luftstroms ermöglichen, der durch einen Lufteinlass (118) und einen Luftauslass (125) strömt,
**dadurch gekennzeichnet, dass** sie Mittel zum Befestigen am Heizkörper umfasst, wobei die Befestigungsmittel im Bereich des ersten Teils (113) des Gehäuses durch mindestens zwei durchgehende, längliche und zueinander parallele Schlitze (123) umfassen, wobei die Breite jedes Schlitzes (123) dafür ausgebildet ist, einen hinteren Teil (410) einer mit dem Heizkörper verbundenen Halterung (400) aufnehmen zu können, und der hintere Teil (410) dafür ausgebildet ist, mit einem Spannmittel (200) zusammenzuwirken, das in der Lage ist, so am Gehäuse (110) in Anlage zu gehen, dass es dasselbe gegen den Heizkörper festhält.

2. Zusatz-Heizvorrichtung nach Anspruch 1, **dadurch gekennzeichnet, dass** jeder Schlitz (123) eine Länge aufweist, die größer als die Breite einer Heizstange oder einer Heizlamelle des Heizkörpers ist.

3. Zusatz-Heizvorrichtung nach einem der vorstehenden Ansprüche, **dadurch gekennzeichnet, dass** eine Rückfläche (112) des Gehäuses (110), die dazu vorgesehen ist, sich einer Befestigungshalterung des Heizkörpers gegenüber zu befinden, um jeden Schlitz (123) herum von konkaver Form ist.

4. Zusatz-Heizvorrichtung nach dem vorstehenden Anspruch, **dadurch gekennzeichnet, dass** die Oberfläche des Gehäuses um die Schlitze (123) herum und im Bereich seiner Rückfläche (112) einen Reibungskoeffizienten von größerem Wert aufweist.

5. Zusatz-Heizvorrichtung nach einem der vorstehenden Ansprüche, **dadurch gekennzeichnet, dass** die Oberfläche des Gehäuses im Bereich der Zonen seiner Vorderfläche (111), die dazu vorgesehen sind, sich mit dem Radiator in Kontakt zu befinden, einen Reibungskoeffizienten von höherem Wert aufweist

6. Zusatz-Heizvorrichtung nach dem vorstehenden Anspruch, **dadurch gekennzeichnet, dass** die Reibungsmittel, die an der Oberfläche des Gehäuses vorhanden sind, ein elastisches Material und/oder Rauigkeiten vom Typ Rippen oder Noppen umfassen.

7. Zusatz-Heizvorrichtung nach einem der vorstehenden Ansprüche, **dadurch gekennzeichnet, dass** jeder Schlitz (123) im Boden eines Hohlraums (122) mündet, der an der Rückfläche (112) des Gehäuses (110) offen ist.

8. Zusatz-Heizvorrichtung nach einem der vorstehenden Ansprüche, **dadurch gekennzeichnet, dass** mindestens ein Lufteinlass (118) in der Rückfläche (112) des Gehäuses (110) ausgestaltet ist.

9. Zusatz-Heizvorrichtung nach dem vorstehenden Anspruch, **dadurch gekennzeichnet, dass** der Lufteinlass (118) von Führungsmitteln (121) umgeben ist, die es ermöglichen, einen Filter (120) vor dem Einlass zu positionieren.

10. Zusatz-Heizvorrichtung nach dem vorstehenden Anspruch, **dadurch gekennzeichnet, dass** es die Führungsmittel (121) ermöglichen, den Filter über eine der Seite des Gehäuses herauszunehmen.

11. Zusatz-Heizvorrichtung nach einem der vorstehenden Ansprüche, **dadurch gekennzeichnet, dass** der Lufteinlass (118) im Boden eines Hohlraums (117) angeordnet ist, der an der Rückfläche (112) und mindestens einer Seite des Gehäuses (110) offen ist.

12. Zusatz-Heizvorrichtung nach einem der vorstehenden Ansprüche, **dadurch gekennzeichnet, dass** der zweite Teil (114) des Gehäuses (110) mindestens einen Luftauslass (125) umfasst, der in einer Vorderfläche (111) des Gehäuses ausgestaltet ist, welche dazu vorgesehen ist, sich dem Heizkörper gegenüber zu befinden.

13. Zusatz-Heizvorrichtung nach dem vorstehenden Anspruch, **dadurch gekennzeichnet, dass** mindestens ein Luftauslass (125) von länglicher Form und senkrecht zu den durchgehenden Schlitzen (123) des ersten Teils (113) des Gehäuses (110) angeordnet ist.

14. Zusatz-Heizvorrichtung nach einem der vorstehenden Ansprüche, **dadurch gekennzeichnet, dass** der zweite Teil (114) des Gehäuses Mittel zum detektieren (127) der Anwesenheit eines Benutzers umfasst.

15. Spannmittel (200), das in der Lage ist, mit hinterem Teil (410) einer mit einem Heizkörper verbundenen Halterung (400) zusammenzuwirken, **dadurch gekennzeichnet, dass** das Spannmittel eine Fläche (230) von komplementärer Form zur konkaven Oberfläche des Gehäuses (110) umfasst, welche einen Schlitz (123) einer Zusatz-Heizvorrichtung nach einem der Ansprüche 3 bis 14 umgibt, um die Reibung zwischen dem Spannmittel (200) und dem Gehäuse (110) zu optimieren.

## Claims

1. Additional heating device (100) intended to be attached on a heating body with bars and/or with heating slats, comprising:
- a casing (110) equipped with at least one air inlet (118) and an air outlet (125), respectively arranged in a first part (113) and a second part (114) of the casing; and
- a heating element as well as a blower, both arranged in the casing (110) so as to enable the heating of an air flow passing through an air inlet (118) and an air outlet (125),
**characterised in that** it comprises means for attaching on the heating body, the attachment means comprising, at the level of the first part (113) of the casing through at least two through slots (123), elongated and parallel to one another, the width of each slot (123) being configured to be able to house a rear part (410) of a support (400) linked to the heating body, and the rear part (410) being configured to cooperate with a clamping means (200) capable of being supported on the casing (110) so as to hold it against the heating body.

2. Additional heating device according to claim 1, **characterised in that** each slot (123) has a length greater than the width of a heating bar or a heating slat of the heating body.

3. Additional heating device according to one of the preceding claims, **characterised in that** a rear face (112) of the casing (110) intended to be opposite a support for attaching to the heating body, is around each concave-shaped slot (123).

4. Additional heating device according to the preceding claim, **characterised in that** the surface of the casing has a friction coefficient of a greater value around the slots (123) and at the level of the rear face (112) thereof.

5. Additional heating device according to one of the preceding claims, **characterised in that** the surface of the casing has a friction coefficient of a greater value at the level of the zones of the front face (111) thereof, intended to be in contact with the radiator.

6. Additional heating device according to the preceding claim, **characterised in that** the friction means present on the surface of the casing comprise an elastic material and/or ridge or boss-type roughness.

7. Additional heating device according to one of the preceding claims, **characterised in that** each slot (123) leads to the bottom of a cavity (122) open over the rear face (112) of the casing (110).

8. Additional heating device according to one of the preceding claims, **characterised in that** at least one air inlet (118) is arranged in the rear face (112) of the casing (110).

9. Additional heating device according to the preceding claim, **characterised in that** the air inlet (118) is surrounded by guiding means (121) enabling to position a filter (120) in front of said inlet.

10. Additional heating device according to the preceding claim, **characterised in that** the guiding means (121) enable to release the filter through one of the sides of the casing.

11. Additional heating device according to one of the preceding claims, **characterised in that** the air inlet (118) is arranged in the bottom of a cavity (117), open over the rear face (112) and at least one side of the casing (110).

12. Additional heating device according to one of the preceding claims, **characterised in that** the second part (114) of the casing (110) comprises at least one air outlet (125) arranged in a front face (111) of the casing intended to be opposite the heating body.

13. Additional heating device according to the preceding claim, **characterised in that** at least one air outlet (125) is of an elongated shape and arranged perpendicularly to the slots (123) crossing the first part (113) of the casing (110).

14. Additional heating device according to one of the preceding claims, **characterised in that** the second part (114) of the casing comprises means for detecting (127) the presence of a user.

15. Clamping means (200) capable of cooperating with the rear part (410) of a support (400) linked to a heating body, **characterised in that** the clamping means comprises a face (230) of complementary shape to the concave surface of the casing (110) surrounding a slot (123) of an additional heating device according to one of claims 3 to 14, so as to optimise the friction between the clamping means (200) and the casing (110).
